Europäisches Patentamt

European Patent Office

Office européen des brevets

(11) Veröffentlichungsnummer: **0 094 370**
**A2**

## (12) EUROPÄISCHE PATENTANMELDUNG

(21) Anmeldenummer: **83890057.9**

(22) Anmeldetag: **19.04.83**

(51) Int. Cl.³: **G 01 F 9/00**

(30) Priorität: **28.04.82 AT 1644/82**

(43) Veröffentlichungstag der Anmeldung: **16.11.83**
**Patentblatt 83/46**

(84) Benannte Vertragsstaaten: **DE FR GB IT**

(71) Anmelder: **Ing. Franz Mitterbauer Gesellschaft m.b.H. & Co. KG., In der Au 15, A-4662 Steyermühl (AT)**

(72) Erfinder: **Pomikacsek, Josef, Dipl. Ing., Esplanade 27, A-4810 Gmunden (AT)**

(74) Vertreter: **Hübscher, Gerhard, Dipl.-Ing. et al, Patentanwälte Dipl.-Ing. Gerhard Hübscher Dipl.-Ing. Helmut Hübscher Dipl.-Ing. Heiner Hübscher Spittelwiese 7, A-4020 Linz (AT)**

(54) Vorrichtung zum Bestimmen des Kraftstoff-Verbrauches eines Verbrennungsmotors.

(57) Eine Vorrichtung zum Bestimmen des Kraftstoffverbrauches eines Verbrennungsmotors weist je einen Messwertgeber (1, 2) für eine von der Drosselklappenstellung ($\alpha$) abhängige Messgrösse und die Motordrehzahl (n) sowie eine den Messwertgebern (1, 2) nachgeschaltete Auswerteeinheit (3) auf. Zur Anpassung an einen bestimmten Verbrennungsmotor sind die Messwertgeber (1, 2) über je einen elektronisch programmierbaren Speicher (9) an die Auswerteeinheit angeschlossen. Zum Programmieren dieser Speicher (9) ist ein Rechner vorgesehen, der programmbedingt aus dem Messwert für den Kraftstoffverbrauch (C) und aus den zugehörigen Messwerten für die Motordrehzahl (n) und die Drosselklappenstellung ($\alpha$) für jeden dieser Messwerte (n, $\alpha$) eine korrigierte Auswertegrösse ($n_k$, $\alpha_k$) unter Wahrung des jeweiligen Verhältnisses (q) der auf Maximalwerte ($n_{max}$, $\alpha_{max}$) bezogenen Werte (n', $\alpha'$; $n_k$, $\alpha_k$) errechnet und die zugehörigen Speicher (9) einliest.

- 1 -

## Vorrichtung zum Bestimmen des Kraftstoffverbrauches eines Verbrennungsmotors

Die Erfindung bezieht sich auf eine Vorrichtung zum Bestimmen des Kraftstoffverbrauches eines über eine Drosselklappe steuerbaren Verbrennungsmotors mit je einem Meßwertgeber für eine von der Drosselklappenstellung abhängige Meßgröße einerseits und die Motordrehzahl anderseits sowie mit einer den Meßwertgeber nachgeschalteten Auswerteeinheit.

Da der Kraftstoffverbrauch eines Verbrennungsmotors einerseits von der Drosselung der Kraftstoffzufuhr durch die Drosselklappe und anderseits von der Motordrehzahl abhängt, kann der Kraftstoffverbrauch auch über diese Größen erfaßt werden. Zu diesem Zweck ist es jedoch erforderlich, den Einfluß von Änderungen dieser Größen auf den Kraftstoffverbrauch eines bestimmten Motors festzustellen, um aus den Meßwerten der Motordrehzahl und einer von der Drosselklappenstellung abhängigen Meßgröße den jeweiligen Verbrauch des Verbrennungsmotors ableiten zu können. Zur Bestimmung der Drosselklappenstellung kann entweder ein Meßwertgeber für die Drosselklappenstellung oder ein Meßwertgeber für den in der Ansaugleitung herrschenden Unterdruck verwendet werden, weil der Unterdruck in der Ansaugleitung einerseits von der Drosselklappenstellung und anderseits von der Motordrehzahl abhängt, so daß bei einer bekannten Drehzahl die Drosselklappenstellung durch den Unterdruck in der Ansaugleitung ausgedrückt werden kann. Die Anpassung der bestehenden Abhängigkeiten des Kraftstoffverbrauches von der Drosselklappenstellung und von der Motordrehzahl wird bei bekannten

0094370

Vorrichtungen mit Hilfe von verstellbaren Potentiometern oder Widerständen durchgeführt, was jedoch zu Schwierigkeiten führt, weil die Abhängigkeit des Kraftstoffverbrauches von diesen Einflußgrößen nicht linear ist und folglich über Potentiometer oder Widerstände nicht genau erfaßt werden kann.

Der Erfindung liegt demnach die Aufgabe zugrunde, diese Mängel zu vermeiden und eine Vorrichtung zum Bestimmen des Kraftstoffverbrauches der eingangs geschilderten Art so zu verbessern, daß sie in einfacher Art und Weise an einen bestimmten Verbrennungsmotor mit einer gewünschten Genauigkeit angepaßt werden kann.

Die Erfindung löst die gestellte Aufgabe dadurch, daß die Meßwertgeber für die von der Drosselklappenstellung abhängige Meßgröße und die Motordrehzahl über je einen elektronisch programmierbaren Speicher an die Auswerteeinheit angeschlossen sind und daß zum Programmieren der Speicher ein eingangsseitig einerseits mit den Meßwertgebern für die Motordrehzahl und die von der Drosselklappenstellung abhängige Meßgröße und anderseits mit einem Meßwertgeber für den Kraftstoffverbrauch verbindbarer Rechner vorgesehen ist, der programmbedingt aus dem Meßwert für den Kraftstoffverbrauch und aus den zugehörigen Meßwerten für die Motordrehzahl und die von der Drosselklappenstellung abhängige Meßgröße für jeden dieser Meßwerte eine korrigierte Auswertegröße unter Wahrung des jeweiligen Verhältnisses der auf Maximalwerte bezogenen Werte für die Motordrehzahl und die von der Drosselklappenstellung abhängige Meßgröße errechnet und in die zugehörigen Speicher einliest.

Da die Auswerteeinheit auf Grund des ihr zugrundeliegenden Bildungsgesetzes im allgemeinen nur für einen eng begrenzten Bereich der Motordrehzahlen und der Drosselklappenstellungen einen Kraftstoffverbrauch mit geringen Toleranzen anzeigen kann, werden die jeweils erfaßten Meßwerte der Motordrehzahl und der Drosselklappenstellung nach der Erfindung durch entsprechend korrigierte Auswertegrößen ersetzt, die mit der durch das Bildungsgesetz der Auswerteeinheit gegebenen Verknüpfung den richtigen Verbrauchswert angeben. Es müssen daher für die einzelnen Meßwerte der Motordrehzahl und der Meßgröße für die Drosselklappenstellung korrigierte Auswertegrößen ermittelt und abgespeichert werden, so daß bei der Erfassung eines bestimmten Meßwertes der Motordrehzahl und der Drosselklappenstellung mit den diesen Meßwerten zugeordneten Auswertegrößen der tatsächliche Verbrauch des jeweiligen Motors angegeben werden kann. Die Zuordnung und Abspeicherung der korrigierten Auswertegrößen erfolgt in den den Meßwertgebern für die Motordrehzahl und die Drosselklappenstellung nachgeschalteten, elektronisch programmierbaren Speichern, die die korrigierten Auswertegrößen an die Auswerteeinheit weitergeben. Zur Bestimmung der korrigierten Auswertegrößen muß bei bestimmten Motordrehzahlen und bei bestimmten Drosselklappenstellungen der Kraftstoffverbrauch eines vorgegebenen Motors zu den Meßgrößen für die Drehzahl und Drosselklappenstellung in Beziehung gesetzt werden. Zur Justierung der Vorrichtung ist daher ein Meßwertgeber für den Kraftstoffverbrauch notwendig. Als Meßwertgeber kann beispielsweise ein Durchflußmeßgerät in der Kraftstoff-Versorgungsleitung des Verbrennungsmotors vorgesehen werden. Aus den ermittelten Meßwerten lassen sich die korrigierten Auswertegrößen errechnen, und zwar unter der Voraussetzung, daß das jeweilige Verhältnis der auf Maximalwerte bezogenen Meßwerte für die Drosselklappenstellung und für die Motordrehzahl auch dem Verhältnis der jeweils zugeordneten, korrigierten Auswertegrößen entspricht. Mit Hilfe eines entsprechend programmierten Rechners lassen sich somit die korrigierten Auswertegrößen in einfacher Weise rasch ermitteln und in die von diesem Rechner programmierbaren Speicher einlesen, womit der Justiervorgang abgeschlossen ist. In Abhängigkeit von einem zulässigen Fehler können selbstverständlich die korrigierten Auswertegrößen Meßwertbereichen zugeordnet werden, wobei auch die korrigierten Auswertegrößen für Zwischenwerte interpoliert werden können, so daß nur vergleichsweise wenige korrigierte Auswertegrößen berechnet werden müssen.

Auf Grund der einfachen Justiermöglichkeit können erfindungsgemäße Vorrichtungen ohne Änderung für die unterschiedlichsten Arten von Verbrennungsmotoren eingesetzt werden. Da nach der Justierung durch die Abspeicherung der entsprechend adressierten Auswertegrößen der Rechner zur Ermittlung der korrigierten Auswertegrößen für die Verbrauchsbestimmung nicht mehr benötigt wird, braucht dieser Rechner auch kein Bestandteil der Vorrichtung zu sein. Es genügt, wenn der Rechner in einer wahlweise anschließbaren, eine gesonderte Baueinheit bildenden Justiereinrichtung vorgesehen wird. Mit einer solchen Justiereinrichtung können dann die einzelnen, untereinander gleichen Vorrichtungen an die jeweiligen Verbrennungsmotoren angepaßt werden.

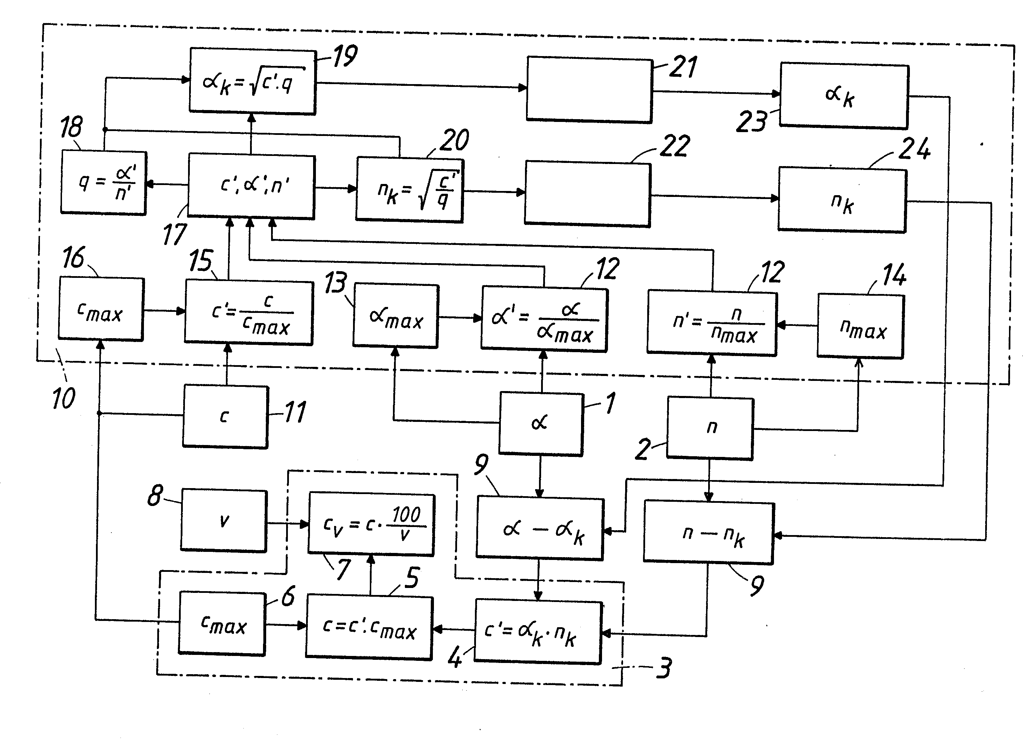

In der Zeichnung ist der Erfindungsgegenstand in einem Ausführungsbeispiel dargestellt, und zwar wird eine erfindungsgemäße Vorrichtung zum Bestimmen des Kraftstoffverbrauches eines Verbrennungsmotors in einem grundsätzlichen Blockschaltbild gezeigt.

Um den Kraftstoffverbrauch eines über eine Drosselklappe steuerbaren Verbrennungsmotors mit geringen Toleranzen bestimmen zu können, wird gemäß dem Ausführungsbeispiel neben dem Winkel $\alpha$ der Drosselklappenstellung auch die Motordrehzahl n mit Hilfe von zwei Meßwertgebern 1 und 2 erfaßt. An Stelle des Meßwertgebers 1 für den Winkel $\alpha$ der Drosselklappenstellung könnte auch ein Meßwertgeber für den Unterdruck in der Ansaugleitung des Motors treten, weil dieser Unterdruck eine von der Drosselklappenstellung abhängige Meßgröße darstellt.

Die beiden Meßwertgeber 1 und 2 sind mit einer Auswerteeinheit 3 verbunden, die eine Multipliziereinheit 4 zur Be-

stimmung des Kraftstoffverbrauches aufweist. Da das Produkt des Meßwertes für die Drosselklappenstellung des Meßwertgebers 1 mit dem Meßwert des Meßwertgebers 2 für die Drehzahl n kein ausreichend genaues Maß für den Kraftstoffverbrauch C ist, müssen die gemessenen $\alpha$- und n-Werte entsprechend korrigiert werden, damit die korrigierten Auswertegrößen $\alpha_k$ und $n_k$ den Kraftstoffverbrauch nach dem Bildungsgesetz der Auswerteeinheit 3 ergeben. Dabei werden die Auswertegrößen auf die jeweils möglichen Maximalwerte bezogen, um von absoluten Größen unabhängig zu werden. Zur Ermittlung des tatsächlichen Verbrauches sind die bezogenen Werte wieder ins Verhältnis zu den Maximalwerten zu setzen. Dies wird in der Auswerteeinheit 3 in einer Schaltung 5 durchgeführt, in die der festgestellte maximale Verbrauchswert $C_{max}$ aus einem Speicher 6 eingegeben und mit dem auf diesen Maximalwert $C_{max}$ bezogenen, am Ausgang der Multipliziereinheit 4 anstehenden Wert $C' = \alpha_k \cdot n_k$ multipliziert wird. Der tatsächliche Verbrauch ergibt sich somit durch den Wert $C = C_{max} \cdot C'$.

Soll der Verbrauch C auf die jeweilige Geschwindigkeit des Fahrzeuges bezogen werden, so kann in einer weiteren Schaltung 7 das Produkt $C_v = C \cdot 100/v$ gebildet werden, wobei v den durch einen Meßwertgeber 8 bestimmten Meßwert für die Fahrzeuggeschwindigkeit darstellt.

Voraussetzung für eine genaue Verbrauchsbestimmung ist, daß jedem Meßwert $\alpha$ und jedem Meßwert n eine entsprechend korrigierte Auswertegröße $\alpha_k$ und $n_k$ zugeordnet werden kann. Diese Zuordnung erfolgt in elektronisch programmierbaren Speichern 9, die einerseits an die Meßwertgeber 1 und 2 und anderseits an eine Justiereinrichtung 10 angeschlossen sind, die die korrigierten Auswertegrößen $\alpha_k$ und $n_k$ zur Verfügung stellt. Diese Justiereinrichtung 10 besteht aus einem Rechner, der eingangsseitig mit den Meßwertgebern 1 und 2 sowie mit einem Meßwertgeber 11 für den Kraftstoffverbrauch bei den jeweiligen Meßwerten $\alpha$ und n verbunden ist. Aus dem blockschaltbildmäßig dargestellten Programmablauf dieses Rechners geht hervor, daß zunächst die Meßwerte $\alpha$ und n in den Schaltungseinheiten 12 auf die Maximalwerte $\alpha_{max}$ und $n_{max}$ bezogen werden, indem die Meßwerte $\alpha$ und n durch die in den Speichern 13 und 14 abgespeicherten Maximalwerte $\alpha_{max}$ und $n_{max}$ dividiert werden.

In ähnlicher Weise wird der gemessene Verbrauchswert C des Meßwertgebers 11 in einer Schaltung 15 auf den maximalen Verbrauchswert $C_{max}$ bezogen, der über einen Speicher 16 zur Verfügung gestellt wird.

Die bezogenen Meßwerte $\alpha'$, n' und C' werden in einem Zwischenspeicher 17 abgespeichert, um aus diesen Werten die korrigierten Auswertegrößen $\alpha_k$ und $n_k$ bilden zu können. Zu diesem Zweck wird angenommen, daß das Verhältnis q der bezogenen Meßwerte $\alpha'$ und n' gleich dem Verhältnis der korrigierten Auswertegrößen $\alpha_k$ und $n_k$ für diese Meßwerte ist. Unter dieser Voraussetzung lassen sich die Auswertegrößen $\alpha_k = (C' \cdot q)^{1/2}$ und $n_k = (C'/q)^{1/2}$ ermitteln. In den Einheiten 18, 19 und 20 werden zunächst das Verhältnis q und dann die korrigierten Auswertegrößen $\alpha_k$ und $n_k$ bestimmt.

Um nicht für jeden Meßwert $\alpha$ und n die korrigierten Auswertegrößen $\alpha_k$ und $n_k$ errechnen zu müssen, können Zwischenwerte zwischen den errechneten Werten mit Hilfe von Interpolationsschaltungen 21 und 22 ermittelt werden. Die den Meßwerten $\alpha$ und n zugeordneten, korrigierten Auswertegrößen $\alpha_k$ und $n_k$ werden in Speichern 23 und 24 abgespeichert und stehen zum Programmieren der Speicher 9 zur Verfügung, so daß jede hiefür geeignete Vorrichtung zum Bestimmen des Kraftstoffverbrauches durch ein Anschließen an die Justiereinrichtung 10 auf einen bestimmten Motor abgestimmt werden kann. Soll der Kraftstoffverbrauch nur in größeren Einheiten (z.B. 0,51) angegeben werden, so brauchen bloß wenige korrigierte Auswertegrößen ermittelt zu werden. Die dazwischenliegenden Meßwerte sind dann entsprechend zuzuordnen.

Patentansprüche :

1. Vorrichtung zum Bestimmen des Kraftstoffverbrauches eines über eine Drosselklappe steuerbaren Verbrennungsmotors mit je einem Meßwertgeber (1,2) für eine von der Drosselklappenstellung ($\alpha$) abhängige Meßgröße einerseits und die Motordrehzahl (n) anderseits sowie mit einer den Meßwertgebern (1,2) nachgeschalteten Auswerteeinheit (3), dadurch gekennzeichnet, daß die Meßwertgeber (1,2) für die von der Drosselklappenstellung ($\alpha$) abhängige Meßgröße und die Motordrehzahl (n) über je einen elektronisch programmierbaren Speicher (9) an die Auswerteeinheit (3) angeschlossen sind und daß zum Programmieren der Speicher (9) ein eingangsseitig einerseits mit den Meßwertgebern (1,2) für die Motordrehzahl (n) und die von der Drosselklappenstellung ($\alpha$) abhängige Meßgröße und anderseits mit einem Meßwertgeber (11) für den Kraftstoffverbrauch (C) verbindbarer Rechner vorgesehen ist, der programmbedingt aus dem Meßwert für den Kraftstoffverbrauch (C) und aus den zugehörigen Meßwerten für die Motordrehzahl (n) und die von der Drosselklappenstellung ($\alpha$) abhängige Meßgröße für jeden dieser Meßwerte ($n, \alpha$) eine korrigierte Auswertegröße ($n_k, \alpha_k$) unter Wahrung des jeweiligen Verhältnisses (q) der auf Maximalwerte ($n_{max}, \alpha_{max}$) bezogenen Werte ($n', \alpha'$; $n_k, \alpha_k$) für die Motordrehzahl und die von der Drosselklappenstellung abhängige Meßgröße errechnet und in die zugehörigen Speicher (9) einliest.

2. Vorrichtung nach Anspruch 1, dadurch gekennzeichnet, daß der Rechner in einer wahlweise anschließbaren, eine gesonderte Baueinheit bildenden Justiereinrichtung (10) vorgesehen ist.

0094370